# EUROPEAN PATENT APPLICATION

(11) **EP 4 807 809 A1**
(43) Date of publication of application: **16.09.2026**
(21) Application number: 25709035.7
(22) Date of filing: 26.01.2025
(51) Int. Cl.: H01M 4/58

(54) **POSITIVE ELECTRODE MATERIAL AND PREPARATION METHOD THEREFOR, POSITIVE ELECTRODE SHEET, AND SODIUM-ION BATTERY**

(30) Priority: 24.01.2025 CN 202510121496
(71) Applicant: Hubei Wanrun New Energy Technology Co., Ltd., Shiyan, Hubei 442500 (CN)
(72) Inventor: WANG, Qin, Shiyan, Hubei 442500 (CN); MA, Weijia, Shiyan, Hubei 442500 (CN); SHI, Zhixiang, Shiyan, Hubei 442500 (CN); LV, Fei, Shiyan, Hubei 442500 (CN); WANG, Wei, Shiyan, Hubei 442500 (CN)
(74) Representative: Studio Torta S.p.A.
(86) International application number: PCT/CN2025/075283
(87) International publication number: WO 2026/156829

(57) **Abstract**

The present application belongs to the technical field of sodium-ion batteries. Provided are cathode material and preparation method thereof, and cathode plate and sodium-ion battery. The cathode material includes a Prussian Blue material, and a molecular formula of the Prussian Blue material is NaₓFe_{y}Fe(CN)_{z}F_{6-z}·nH₂O·mHCl, where 1.90≤x≤2.20, 0.9≤y≤1.2, 4.20≤z≤5.50, 1.00≤n≤1.75, and 0.001≤m≤0.007. According to the present disclosure, the structure stability of the cathode material is improved, and an efficient diffusion channel of sodium ions is optimized at the same time, thereby improving a sodium storage capacity and cycling stability. Through a synergistic effect between the ions, the problem of a high content of crystal water in the cathode material is solved, the structure stability of the cathode material and the stability of electrochemical sodium storage performance are improved, and production costs are also reduced, thereby expanding an application range of sodium-ion batteries.

## Description

### Technical Field

The present disclosure relates to the technical field of sodium-ion battery, and specifically, to cathode material and preparation method thereof, and cathode plate and sodium-ion battery.

### Background

Prussian Blue (PB) and Prussian Blue Analogues (PBAs) are constituted by three-dimensional framework structures, and can provide wide channels for the intercalation and de-intercalation of sodium ions, such that the Prussian Blue and Prussian Blue Analogues are ideal Sodium-Ion Battery (SIB) cathode materials. However, there are a large number of water molecules and vacancies in PBAs material, which greatly reduces storage sites of the sodium ions; and transition metal ions in a metal-organic framework are easily precipitated during a cycle process, leading to a limited sodium storage capacity and poor cycling stability of PBA cathode material. In recent years, various PBAs-modified technologies have been developed to significantly improve electrochemical sodium storage performance.

Metal element doping is used as a basic method to regulate capacities, lifetime, rate performance, and production costs, and has been widely used in the preparation of SIB materials. Metal ions are generally doped at Site M or Site Na, the metal at the Site M is partially replaced with the transition metal ions, such as Ni²⁺, Co²⁺, Cu²⁺, Mn²⁺, Sn⁴⁺, etc., and K⁺ is generally doped at the Site Na. However, the doping of metal cations cannot reduce the content of crystal water in the PBAs, and the doping of precious metals also leads to an increase in the production cost of SIB products.

### Summary

In view of the technical problems in the Background, the present disclosure provides cathode material and preparation method thereof, and cathode plate and sodium-ion battery, to solve the technical problems of poor rate performance and cycling performance due to a too high content of crystal water of a Prussian Blue sodium-ion battery material.

In first aspect, an embodiment of the present disclosure provides a cathode material. The cathode material includes Prussian Blue material, and a molecular formula of the Prussian Blue material is NaₓFe_{y}Fe(CN)_{z}F_{6-z}·nH₂O·mHCl, where 1.90≤x≤2.20, 0.9≤y≤1.2, 4.20≤z≤5.50, 1.00≤n≤1.75, and 0.001≤m≤0.007.

In the technical solution of this embodiment of the present disclosure, by controlling chemical compositions of the Prussian Blue material, fluorine is introduced to replace partial cyanide ion, to reduce the content of the crystal water and use HCl to occupy a vacancy of the crystal water, such that the stability of the cathode material is effectively improved, and the electrochemical performance of the cathode material is improved.

In some embodiments, a diffusion coefficient of sodium ions in the Prussian Blue material is 3.00×10⁻¹³ cm²/s-1.00×10⁻¹⁰ cm²/s.

In the embodiments, by controlling the diffusion coefficient of the sodium ions in the Prussian Blue material within the above range, a transmission rate of the sodium ions is accelerated, such that the sodium ions are intercalated and de-intercalated from the cathode material more rapidly, and the electrochemical performance such as rate performance and cycling performance of a sodium-ion battery using the cathode material is improved.

In second aspect, an embodiment of the present disclosure provides a method for preparing a cathode material. The method for preparing a cathode material includes: a base solution is provided, where the base solution includes sodium ions, iron ions, and hydrogen fluoride; the base solution, a sodium ferrocyanide solution, a ferrous salt solution, and a sodium salt solution are mixed, and an aging treatment is performed to obtain an aged slurry; a first solid-liquid separation treatment is performed on the aged slurry to obtain an intermediate product; a slurrying treatment is performed on the intermediate product to obtain a reaction slurry; and a reaction treatment is performed on the reaction slurry to obtain a cathode material.

In the technical solution of this embodiment of the present disclosure, in a high-concentration fluorine ion environment of the base solution, fluorine ions having strong complexing capacities complexed with the added ferrous ions and replace partial cyanide ion, such that the fluorine ions are partially introduced in the Prussian Blue material. The aging treatment facilitates full crystallization of the Prussian Blue material, and the reaction treatment further reduces the crystal water inside the Prussian Blue material, such that the stability of the cathode material is improved, thereby improving the electrochemical performance such as cycling stability and rate performance of the cathode material.

In some embodiments, the step of obtaining the base solution includes: a first solution and a second solution are mixed to obtain the base solution, where the first solution includes sodium fluoride and iron fluoride, and the second solution includes hydrogen fluoride; a pH value of the base solution is 2.5-3.5; a molar ratio of solute of the sodium ferrocyanide solution, solute of the ferrous salt solution, and solute of the sodium salt solution is 1:(1.2-1.5):(2-3); a concentration of the sodium ferrocyanide solution is 1 mol/L-2 mol/L; and/or a concentration of the ferrous salt solution is 1.5 mol/L-2.5 mol/L, and the ferrous salt solution is selected from any one or more of a ferrous chloride solution, a ferrous sulfate solution, and a ferrous acetate solution; and/or the ferrous salt solution further includes a reducing agent and a complexing agent; and/or the reducing agent is sulfite and/or hydrazine hydrate; and/or a concentration of the reducing agent in the ferrous salt solution is 0.1 mol/L-0.5 mol/L; and/or the complexing agent is ethylenediaminetetraacetic acid and/or citric acid; and/or a concentration of the complexing agent in the ferrous salt solution is 0.01 mol/L-0.2 mol/L; and/or a concentration of the sodium salt solution is 3 mol/L-5 mol/L, a mass proportion of sodium fluoride in the solute of the sodium salt solution is 10%-20%, and the remaining sodium salt in the solute of the sodium salt solution is selected from any one or more of sodium chloride, sodium sulfate, sodium acetate, and sodium citrate.

In the embodiments, by controlling the step of forming the base solution and compositions, proportions, and concentrations within the above ranges, synthesis conditions of the cathode material are optimized, thereby improving the overall performance of the cathode material. Meanwhile, by controlling the pH value within the above range, the effectiveness of the doping of the fluorine ions is improved. Furthermore, by optimizing the above parameters, not only uniform doping of the fluorine ions is promoted, but also structural integrity of the cathode material is improved, thereby improving the overall performance of the cathode material.

In some embodiments, a temperature for the aging treatment is 70 °C-90 °C, and a time for the aging treatment is 1 h-2 h; a molar ratio of the sodium fluoride to the iron fluoride in the first solution is 1:(0.1-0.2); and/or a total concentration of fluoride ions in the first solution is 2 mol/L-4 mol/L; and/or a concentration of the second solution is 5 mol/L-8 mol/L.

By controlling the temperature and time of the aging treatment, and controlling the concentrations of the above solutions and the ratio of the amounts of the substances of solute in the solutions within the above corresponding ranges respectively, the efficiency and effect of the doping of the fluorine ions are improved, such that the structure stability of the cathode material is improved, and the electrochemical performance of the cathode material is improved.

In some embodiments, the intermediate product and an acid solution are mixed and subjected to the slurrying treatment to obtain the reaction slurry; when the slurrying treatment is performed, and/or a temperature for the reaction treatment is 110 °C-130 °C, and a time for the reaction treatment is 30 min-60 min; and/or a stirring speed of the reaction treatment is 100 r/min-300 r/min; and/or the acid solution is a hydrochloric acid-ethanol solution, and a concentration of hydrogen ions in the acid solution is 0.5 mol/L-1 mol/L; and/or a mass ratio of solid to liquid in the reaction slurry is 1:(3-4).

By controlling the step of the slurrying treatment as above, a dispersion effect of the slurry is improved. Meanwhile, by controlling the conditions of the reaction treatment within the above corresponding range, at a high temperature, an ethanol-hydrogen chloride system is fully used to perform corrosion on the intermediate product and azeotropy and replacement of partial crystal water, to further reduce the content of the crystal water in the cathode material, thereby improving the stability and electrochemical performance of the cathode material.

In some embodiments, the intermediate product is sequentially subjected to second washing and second drying before the slurrying treatment, wherein the conductivity of washing water after the second washing is completed is ≤150 µS/cm, and moisture content in the intermediate product is lower than 0.2%.

By controlling conditions of the second washing and second drying, a moisture content of the reaction slurry which is obtained after the slurrying treatment of intermediate product is reduced, such that the content of the crystal water inside the cathode material is further reduced through the reaction treatment, thereby improving the stability and electrochemical performance of the cathode material.

In some embodiments, a product obtained through the reaction treatment is subjected to a second solid-liquid separation treatment, first washing, first drying, and crushing in sequence, to obtain the cathode material; and/or alcohol is used to perform the first washing until a pH value of a washing liquid after washing is 5.5 and above; the first drying is performed under production of a protective gas until a mass fraction of ethanol in the material is less than 0.1%, a temperature for the first drying is 110 °C-150 °C, and an environmental oxygen content during the first drying is less than 1000 ppm; and a particle size of the cathode material obtained after crushing is 1 µm-5 µm.

By controlling conditions of first washing and first drying within the above ranges, residual acid solution and impurities are removed, thereby improving the purity of the cathode material. Meanwhile, by controlling the environmental oxygen content during the first drying and performing the first drying under the production of the protective gas, oxidation of the cathode material and adsorption of moisture are reduced. By controlling the particle size of the crushed cathode material within the above range, the particle size uniformity and compaction density of the cathode material are improved. Through a synergistic effect of the above steps, the electrochemical performance of a sodium-ion battery using the cathode material is improved.

In third aspect, an embodiment of the present disclosure provides a cathode plate. The cathode plate includes the above cathode material, or a cathode material prepared by the above method for preparing a cathode material.

In this embodiment, thanks to the low content of the crystal water of the cathode material, and since the cathode plate including the cathode material is prepared by the cathode material of the present disclosure, the electrochemical performance such as cycling stability and rate performance of the cathode plate is excellent.

In fourth aspect, an embodiment of the present disclosure provides a sodium-ion battery, including a cathode plate, and the cathode plate is the above cathode plate.

In this embodiment, since the sodium-ion battery is prepared by the cathode plate of the present disclosure, the sodium-ion battery has high cycling performance and rate performance, and the low content of the crystal water of the cathode material reduces the hydrolysis risk of electrolyte of sodium-ion battery, such that the stability and electrochemical performance of the sodium-ion battery are improved.

The above descriptions are only an overview of the technical solutions of the present disclosure. In order to have a clearer understanding of the technical means of the present disclosure, and implement same according to the contents of the specification and in order to make the above and other purposes, features, and advantages of the present disclosure more obvious and easier to understand, the specific embodiments of the present disclosure are specifically listed below.

### Brief Description of the Drawings

In order to more clearly explain the technical solutions of the present disclosure, a brief introduction will be given below to the drawings required to be used in the present disclosure. It is apparent that the drawings in the following descriptions are merely some implementations of the present disclosure. Other drawings can be obtained from those of ordinary skill in the art according to these drawings without any creative work.
Fig. 1 is a flowchart of a preparation process of a cathode material according to Embodiment 1 of the present disclosure.
Fig. 2 is a test result diagram of a charging specific capacity and a discharging specific capacity of a sodium-ion battery using a cathode material according to Embodiment 1 of the present disclosure.

### Detailed Description of the Embodiments

The embodiments of the technical solutions of the present disclosure will be described in detail below in conjunction with the accompanying drawings. The following embodiments are only intended to provide a clearer explanation of the technical solutions of the present disclosure, and therefore they are only used as examples and rather than as limitations to the scope of protection of the present disclosure.

Unless otherwise defined, all technical and scientific terms as used herein have the same meanings as those commonly understood by those skilled in the technical field of the present disclosure; the terms as used herein are only intended for the purpose of describing specific embodiments rather than limiting the present disclosure; and the terms "including" and "having" in the description and claims, as well as the accompanying drawings of the present disclosure, and any variations thereof, are intended to cover non-exclusive inclusion.

In the description of embodiments of the present disclosure, the technical terms "first" and "second", etc., are only used to distinguish different objects and cannot be understood as indicating or implying relative importance or implicitly indicating the number, specific order or primary and secondary relationships of the indicated technical features. In the description of embodiments of the present disclosure, "multiple" means more than two, unless otherwise specifically defined explicitly.

Reference to "embodiments" herein means that specific features, structures, or characteristics described in combination with embodiments may be included in at least one embodiment of the present disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of the present disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of the present disclosure, the term "multiple" refers to more than two (including two), similarly, "multiple groups" refers to more than two groups (including two groups), and "multiple pieces" refers to more than two pieces (including two pieces).

In the description of the embodiments of the present disclosure, the orientation and position relationships indicated by the technical terms "center", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of the present disclosure and simplifying the description, rather than indicating or implying that the device or element referred to thereby must have a specific orientation and be constructed and operated in a specific orientation, and thus it cannot be understood as limitations on the embodiments of the present disclosure.

In the description of the embodiments of the present disclosure, unless otherwise specified, a solvent of a "base solution", a "solution" or a "slurry" is selected from at least one of deionized water, secondary water, distilled water, pure water, or ultrapure water.

In the description of the embodiments of the present disclosure, "ppm" indicates parts per million concentration by mass.

Some specific embodiments are listed below. It should be noted that the embodiments described below are exemplary and are only intended to explain the present disclosure, which cannot be understood as limitations to the present disclosure. If no specific technology or conditions are indicated in the examples, the technology or conditions described in the literature in the art or the product specification shall be followed. The reagents or instruments used of which the manufacturers are not indicated are conventional products that are commercially available.

In first aspect, the present disclosure provides a cathode material. The cathode material includes a Prussian Blue material, and a molecular formula of the Prussian Blue material is NaₓFe_{y}Fe(CN)_{z}F_{6-z}·nH₂O·mHCl, where 1.90≤x≤2.20, 0.9≤y≤1.2, 4.20≤z≤5.50, 1.00≤n≤1.75, and 0.001≤m≤0.007.

Further, 1.90≤x≤2.16, preferably 2.00≤x≤2.16, for example, a value of x may be 2.00, 2.08, 2.16, or the like, or may also be other values within the range, which is not limited herein.

Further, 0.93≤y≤1.12, for example, a value of y may be 0.93, 0.97, 1.00, 1.02, 1.05, 1.12, or the like, or may also be other values within the range, which is not limited herein.

Further, 4.21≤z≤5.50, preferably 4.21≤z≤5.38, for example, a value of z may be 4.21, 4.92, 4.96, 4.99, 5.00, 5.06, 5.08, 5.38, or the like, or may also be other values within the range, which is not limited herein.

Further, 1.00≤n≤1.74, preferably 1.10≤n≤1.74, for example, a value of n may be 1.10, 1.12, 1.13, 1.19, 1.24, 1.38, 1.44, 1.48, 1.55, 1.58, 1.74, or the like, or may also be other values within the range, which is not limited herein.

Further, 0.001≤m≤0.007, for example, a value of m may be 0.001, 0.002, 0.003, 0.004, 0.007, or the like, or may also be other values within the range, which is not limited herein.

Further, preferably, the molecular formula of the Prussian Blue material may be Na_{2.00}Fe_{1.00}Fe(CN)_{4.99}F_{1.01}·1.12H₂O·0.003HCl, Na_{2.00}Fe_{1.05}Fe(CN)_{4.92}F_{1.08}·1.10H₂O·0.003HCl, Na_{2.00}Fe_{1.12}Fe(CN)_{4.21}F_{1.79}·1.48H₂O·0.004HCl, Na_{2.00}Fe_{1.00}Fe(CN)_{5.00}F_{1.00}·1.13H₂O·0.003HCl, Na_{2.00}Fe_{1.00}Fe(CN)_{5.06}F_{0.94}·1.38H₂O·0.003HCl, Na_{2.08}Fe_{0.97}Fe(CN)_{4.96}F_{1.04}·1.44H₂O·0.004HCl, Na_{2.16}Fe_{0.93}Fe(CN)_{5.08}F_{0.92}·1.58H₂O·0.007HCl, Na_{2.00}Fe_{1.02}Fe(CN)_{4.99}F_{1.01}·1.19H₂O·0.003HCl, Na_{2.16}Fe_{1.12}Fe(CN)_{5.38}F_{1.01}·1.55H₂O·0.004HCl, Na_{2.00}Fe_{1.00}Fe(CN)_{4.99}F_{1.01}·1.24H₂O·0.002HCl, Na_{2.00}Fe_{1.00}Fe(CN)_{4.99}F_{1.01}·1.74H₂O·0.001HCl, or the like, or other molecular formulas meeting the molecular formula of the Prussian Blue material, which is not limited herein.

In the technical solution of this embodiment of the present disclosure, by controlling chemical compositions of the Prussian Blue material, fluorine is introduced to replace partial cyanide ion, to reduce the content of the crystal water and use HCl to occupy a vacancy of the crystal water, such that the stability of the cathode material is effectively improved, and the electrochemical performance of the cathode material is improved.

Specifically, fluorine ions have high electronegativity and small ionic radius, and thus can effectively replace partial cyanide ions, to form a stable complex structure, such that the conductivity of the cathode material is improved, the content of the crystal water is reduced, and damages of water molecules to the structure of the cathode material due to deintercalation during a cycle process are reduced, thereby improving the structure stability of the cathode material. Furthermore, due to the doping of the fluorine ions, a deintercalation channel of sodium ions in the cathode material is optimized, such that a de-intercalation speed of the sodium ions is accelerated, thereby improving the electrochemical performance such as rate performance and cycling performance of the cathode material. HCl in the Prussian Blue material occupies the vacancy of the crystal water, such that the content of the crystal water is reduced while the crystal water is prevented from de-intercalating to damage the structure of the cathode material, thereby effectively improving the stability of the cathode material.

In some embodiments of the present disclosure, a diffusion coefficient of sodium ions in the Prussian Blue material is 3.00×10⁻¹³ cm²/s-1.00×10⁻¹⁰ cm²/s.

The diffusion coefficient of the sodium ions in the Prussian Blue material is 1.00×10⁻¹³ cm²/s-1.00×10⁻¹⁰ cm²/s, preferably 3.74×10⁻¹³ cm²/s-8.97×10⁻¹¹ cm²/s, which may be, for example, 8.97×10⁻¹¹ cm²/s, 5.67×10⁻¹¹ cm²/s, 4.89×10⁻¹³ cm²/s, 7.69×10⁻¹¹ cm²/s, 7.57×10⁻¹³ cm²/s, 1.32×10⁻¹¹ cm²/s, 8.65×10⁻¹³ cm²/s, 8.12×10⁻¹¹ cm²/s, 3.74×10⁻¹³ cm²/s, 4.72×10⁻¹¹ cm²/s, 9.23×10⁻¹³ cm²/s, or the like, or may also be other values within the range, and is not limited herein.

By controlling the diffusion coefficient of the sodium ions in the Prussian Blue material within the above range, a transmission rate of the sodium ions is accelerated, such that the sodium ions may be intercalated and de-intercalated from the cathode material more rapidly, and the electrochemical performance such as rate performance and cycling performance of a sodium-ion battery using the cathode material is improved.

In some embodiments, a bulk density of the cathode material is 0.58 g/mL-0.78 g/mL. For example, the bulk density may be 0.58 g/mL, 0.60 g/mL, 0.61 g/mL, 0.63 g/mL, 0.64 g/mL, 0.66 g/mL, 0.69 g/mL, 0.78 g/mL, or the like, or may also be other values within the range, which is not limited herein.

In some embodiments, a tap density of the cathode material is 1.15 g/mL-1.39 g/mL. For example, the tap density may be 1.15 g/mL, 1.16 g/mL, 1.18 g/mL, 1.20 g/mL, 1.21 g/mL, 1.23 g/mL, 1.29 g/mL, 1.31 g/mL, 1.39 g/mL, or the like, or may also be other values within the range, which is not limited herein.

In some embodiments, a compaction density of the cathode material is 1.78 g/mL-2.09 g/mL. For example, the compaction density may be 1.78 g/mL, 1.87 g/mL, 1.91 g/mL, 1.93 g/mL, 1.94 g/mL, 1.97 g/mL, 1.98 g/mL, 2.04 g/mL, 2.09 g/mL, or the like, or may also be other values within the range, which is not limited herein.

By controlling the bulk density, tap density, and compaction density of the cathode material within the above corresponding ranges respectively, the cathode material with an improved energy density is obtained, such that the electrochemical performance such as a charging specific capacity, a discharging specific capacity, etc. of the cathode material is improved.

In some embodiments, a D10 particle size of the cathode material is 0.3 µm-0.8 µm. For example, the D10 particle size may be 0.3 µm, 0.4 µm, 0.5 µm, 0.6 µm, 0.7 µm, 0.8 µm, or the like, or may also be other values within the range, which is not limited herein.

In some embodiments, a D50 particle size of the cathode material is 2.3 µm-3.1 µm. For example, the D50 particle size may be 2.3 µm, 2.4 µm, 2.5 µm, 2.7 µm, 2.8 µm, 2.9 µm, 3.1 µm, or the like, or may also be other values within the range, which is not limited herein.

In some embodiments, the D10 particle size and D50 particle size of the cathode material are obtained through testing using a laser particle size analyzer. D10 particle size indicates a corresponding particle size when the percentage of cumulative volume distribution of the cathode material reaches 10%; and D50 particle size indicates a corresponding particle size when the percentage of cumulative volume distribution of the cathode material reaches 50%.

By controlling the D10 particle size and D50 particle size of the cathode material within the above corresponding ranges respectively, the cathode material with concentrated particle size distribution is obtained, such that the consistency of the cathode material in a charging-discharging process is improved, thereby improving the electrochemical performance of the cathode material.

In some embodiments, an iron leaching amount of the cathode material is 6.4 ppm-59.2 ppm. For example, the iron leaching amount may be 6.4 ppm, 6.7 ppm, 10.3 ppm, 11.2 ppm, 11.3 ppm, 12.1 ppm, 12.5 ppm, 13.8 ppm, 15.3 ppm, 59.2 ppm, or the like, or may also be other values within the range, which is not limited herein.

In some embodiments, a magnetic substance amount of the cathode material is 0.11 ppm-0.14 ppm. For example, the magnetic substance amount may be 0.11 ppm, 0.12 ppm, 0.14 ppm, or the like, or may also be other values within the range, which is not limited herein.

In some embodiments, a free moisture content of the cathode material is 103 ppm-399 ppm. For example, the free moisture content may be 103 ppm, 109 ppm, 137 ppm, 168 ppm, 178 ppm, 189 ppm, 198 ppm, 212 ppm, 256 ppm, 399 ppm, or the like, or may also be other values within the range, which is not limited herein.

By controlling the iron leaching amount, magnetic substance amount, and free moisture content of the cathode material within the above corresponding ranges respectively, the quality of a cathode material product is improved, and an effect of the cathode material when being used in a sodium-ion battery is improved.

In second aspect, the present disclosure provides a method for preparing a cathode material. The method for preparing a cathode material includes: a base solution is provided, where the base solution includes sodium ions, iron ions, and hydrogen fluoride; the base solution, a sodium ferrocyanide solution, a ferrous salt solution, and a sodium salt solution are mixed, and an aging treatment is performed to obtain an aged slurry; a first solid-liquid separation treatment is performed on the aged slurry to obtain an intermediate product; a slurrying treatment is performed on the intermediate product to obtain a reaction slurry; and a reaction treatment is performed on the reaction slurry to obtain a cathode material.

In the technical solution of this embodiment of the present disclosure, in a high-concentration fluorine ion environment of the base solution, fluorine ions having strong complexing capacities complexed with the added ferrous ions and replace partial cyanide, such that the fluorine ions are partially introduced in the Prussian Blue material. The aging treatment facilitates full crystallization of the Prussian Blue material, and the reaction treatment further reduces the crystal water inside the Prussian Blue material, such that the stability of the cathode material is improved, thereby improving the electrochemical performance such as cycling stability and rate performance of the cathode material.

In some embodiments of the present disclosure, the step of obtaining the base solution includes: a first solution and a second solution are mixed to obtain the base solution, where the first solution includes sodium fluoride and iron fluoride, and the second solution includes hydrogen fluoride.

The addition of the iron fluoride provides the fluorine ions while providing fluoride iron complex ions, such that a basis for subsequent substitution of fluorine is provided.

In some implementations, a pH value of the base solution is 2.5-3.5.

A too low pH value does not facilitate the stability of a material structure, and a too high pH value does not facilitate the intercalation of the fluorine ions, such that the effectiveness of the doping of the fluorine ions is improved by controlling the pH value within the range.

In some implementations, the pH value of the base solution may be 2.5, 2.6, 2.7, 2.8, 2.9, 3.1, 3.2, 3.3, 3.4, 3.5, or the like, or may also be other values within the range, which is not limited herein.

In some implementations, a molar ratio of solute of the sodium ferrocyanide solution, solute of the ferrous salt solution, and solute of the sodium salt solution is 1: (1.2-1.5):(2-3).

By controlling the molar ratio, chemical compositions of the final cathode material are controlled more accurately, promoting its molecular formula to be closer to an optimal ratio of NaₓFe_{y}Fe(CN)_{z}F_{6-z}·nH₂O·mHCl. Such ratio facilitates optimization of the structure stability and ion diffusion channel of the cathode material, such that the capacity and cycling stability of the cathode material are improved.

In some embodiments, the molar ratio of the solute of the sodium ferrocyanide solution, solute of the ferrous salt solution, and solute of the sodium salt solution may be 1:1.2:2, 1:1.3:2, 1:1.4:2, 1:1.5:2, 1:1.2:2.5, 1:1.3:2.5, 1:1.4:2.5, 1:1.5:2.5, 1:1.2:3, 1:1.3:3, 1:1.4:3, 1:1.5:3, or the like, or may also be other values within the range, which is not limited herein.

In some embodiments, a concentration of the sodium ferrocyanide solution is 1 mol/L-2 mol/L.

In some embodiments, a concentration of the ferrous salt solution is 1.5 mol/L-2.5 mol/L, and the ferrous salt solution is selected from any one or more of a ferrous chloride solution, a ferrous sulfate solution, and a ferrous acetate solution. In some embodiments, the concentration of the sodium ferrocyanide solution may be 1 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, 2.0 mol/L, 2.1 mol/L, 2.2 mol/L, 2.3 mol/L, 2.4 mol/L, 2.5 mol/L, or the like, or may also be other values within the range, which is not limited herein.

By controlling the concentration of the sodium ferrocyanide solution and the concentration of the ferrous salt solution within the above ranges respectively based on reaction kinetics and chemical equilibrium, the reaction is performed efficiently, and the risks of side reactions or damages to the material structure due to excessive reactants are reduced. Preferably, the above types of ferrous salts are wide in source and moderate in cost, such that the economy of the entire production process is improved. Furthermore, the ferrous salts are also good in solubility in solutions, and thus are convenient to control and operate, thereby improving the stability and cost control of the production process.

In some embodiments, the ferrous salt solution further includes a reducing agent and a complexing agent.

Fe²⁺ is the key to constitute a Prussian Blue material framework, and is crucial to form a correct crystal structure by maintaining its reducing state. The presence of the reducing agent ensures that ferrous ions remain in a divalent state during synthesis, thereby avoiding oxidation to trivalent iron ions (Fe³⁺). The complexing agent is conductive to forming a stable complex with the ferrous ions, to reduce the risks of premature precipitation or oxidation of the ferrous ions in the solutions, such that the uniform dispersion and stable presence of the ferrous ions during reaction are improved, facilitating formation of a uniform crystal structure.

In some embodiments, the reducing agent is sulfite and/or hydrazine hydrate.

As the reducing agent, the sulfite and/or hydrazine hydrate promotes the proceeding of a synthesis reaction, especially the step involving the reaction of the sodium ferrocyanide solution and the base solution.

In some embodiments, a concentration of the reducing agent in the ferrous salt solution is 0.1 mol/L-0.5 mol/L.

Excessive concentration of the reducing agent may generate unnecessary side reactions, consuming too many resources, while a too low concentration may be unable to effectively promote the reduction reaction, affecting the quality of the material and the proceeding of the reaction. The problem of the efficiency and use cost of the reducing agent during reaction is balanced by controlling the concentration of the reducing agent within the above range.

In some embodiments, the concentration of the reducing agent in the ferrous salt solution may be 0.1 mol/L, 0.15 mol/L, 0.20 mol/L, 0.25 mol/L, 0.30 mol/L, 0.35 mol/L, 0.40 mol/L, 0.45 mol/L, 0.50 mol/L, or the like, or may also be other values within the range, which is not limited herein.

In some embodiments, the complexing agent is ethylenediaminetetraacetic acid (EDTA) and/or citric acid.

The complexing agent of the above type is contribute to forming a more stable complex with the ferrous ions, to form the uniform crystal structure, thereby improving the structure stability of the cathode material.

In some embodiments, a concentration of the complexing agent in the ferrous salt solution is 0.01 mol/L-0.2 mol/L.

By controlling the concentration of the complexing agent within the above range, the effectiveness of a complex reaction and the controllability of the material structure are improved.

In some embodiments, the concentration of the complexing agent in the ferrous salt solution may be 0.01 mol/L, 0.02 mol/L, 0.03 mol/L, 0.04 mol/L, 0.05 mol/L, 0.06 mol/L, 0.07 mol/L, 0.08 mol/L, 0.09 mol/L, 0.1 mol/L, 0.11 mol/L, 0.12mol/L, 0.13 mol/L, 0.14 mol/L, 0.15 mol/L, 0.16 mol/L, 0.17 mol/L, 0.18 mol/L, 0.19 mol/L, 0.2 mol/L, or the like, or may also be other values within the range, which is not limited herein.

In some embodiments, a concentration of the sodium salt solution is 3 mol/L-5 mol/L, a mass proportion of sodium fluoride in the solute of the sodium salt solution is 10%-20%, and the remaining sodium salt in the solute of the sodium salt solution is selected from any one or more of sodium chloride, sodium sulfate, sodium acetate, and sodium citrate. In some embodiments, the concentration of the sodium salt solution may be 3 mol/L, 3.1 mol/L, 3.2mol/L, 3.3 mol/L, 3.4 mol/L, 3.5 mol/L, 3.6 mol/L, 3.7 mol/L, 3.8 mol/L, 3.9 mol/L, 4.0 mol/L, 4.1 mol/L, 4.2 mol/L, 4.3 mol/L, 4.4 mol/L, 4.5 mol/L, 4.6 mol/L, 4.7 mol/L, 4.8 mol/L, 4.9 mol/L, 5 mol/L, or the like, or may also be other values within the range, which is not limited herein.

By controlling the concentration of the sodium salt solution and the mass proportion of the sodium fluoride and selecting different sodium salts, synthesis conditions of the cathode material are optimized to promote the efficient proceeding of the reaction, a microstructure of the cathode material is regulated and controlled, the electrochemical performance of the cathode material is improved, and costs and performance are balanced at the same time.

To sum up, by controlling the step of forming the base solution and the compositions, proportions, and concentrations of the solutions within the above ranges, synthesis conditions of the cathode material are optimized, thereby improving the overall performance of the cathode material. Meanwhile, by optimizing the above parameters, the uniform doping of the fluorine ions is promoted, and the structure integrity of the cathode material, thereby improving the overall performance of the cathode material.

In some embodiments, the step of mixing the base solution, the sodium ferrocyanide solution, the ferrous salt solution, and the sodium salt solution includes the following operations:
Temperatures of the sodium ferrocyanide solution, the ferrous salt solution, and the sodium salt solution are held respectively;
The sodium ferrocyanide solution, the ferrous salt solution, and the sodium salt solution are added to the base solution within a first mixing time.

In some embodiments, the temperatures of the sodium ferrocyanide solution, the ferrous salt solution, and the sodium salt solution are held at 70 °C-90 °C.

In some embodiments, before the sodium ferrocyanide solution, the ferrous salt solution, and the sodium salt solution are added to the base solution, the temperature of the base solution is held at 70 °C-90 °C.

In some embodiments, the temperatures of the sodium ferrocyanide solution, the ferrous salt solution, the sodium salt solution and/or the base solution are held at the same temperature for the aging treatment.

In some embodiments, the sodium ferrocyanide solution, the ferrous salt solution, and the sodium salt solution are respectively added to the base solution within the first mixing time; or the sodium ferrocyanide solution, the ferrous salt solution, and the sodium salt solution are mixed, and then added to the base solution within the first mixing time.

In some embodiments, the first mixing time is 30 min to 60 min, for example, may be 35 min, 40 min, 45 min, 50 min, 55 min, or the like.

In some embodiments, the mixing of the base solution, the sodium ferrocyanide solution, the ferrous salt solution, and the sodium salt solution is performed while stirring. A stirring speed may be 100 r/min-300 r/min.

In some embodiments of the present disclosure, a temperature for the aging treatment is 70 °C-90 °C, and a time for the aging treatment is 1 h-2 h; and a molar ratio of the sodium fluoride to the iron fluoride in the first solution is 1:(0.1-0.2).

By performing the aging treatment within the above temperature range and time range, the risks of generating excessive agglomeration or too small particles are reduced, such that the uniform and ordered crystal structure is formed, and the conductivity and ion diffusion efficiency of the cathode material are improved, thereby improving the sodium storage capacity and cycling stability of a battery. In some embodiments of the present disclosure, the temperature for the aging treatment may be 70 °C, 72 °C, 74 °C, 75 °C, 76 °C, 78 °C, 80 °C, 82 °C, 84 °C, 85 °C, 86 °C, 88 °C, 90 °C, or the like, or may also be other values within the range, which is not limited herein. The time for the aging treatment may be 1 h, 1.1 h, 1.2 h, 1.3 h, 1.4 h, 1.5 h, 1.6 h, 1.7 h, 1.8 h, 1.9 h, 2h, or the like, or may also be other values within the range, which is not limited herein. The ratio of the amount of the substance containing the sodium fluoride to the amount of the substance containing the iron fluoride in the first solution may be 1:0.1, 1:0.11, 1:0.12, 1:0.13, 1:0.14, 1:0.15, 1:0.16, 1:0.17, 1:0.18, 1:0.19, 1:0.2, or the like, or may also be other values within the range, which is not limited herein.

In some embodiments, a total concentration of fluoride ions in the first solution is 2 mol/L-4 mol/L.

By controlling the ratio of the amount of the substance containing the sodium fluoride to the amount of the substance containing the iron fluoride in the first solution within the above range, the fluoride ions in the cathode material are uniformly doped. In some embodiments, the total concentration of the fluoride ions in the first solution may be 2 mol/L, 2.1 mol/L, 2.2 mol/L, 2.3 mol/L, 2.4 mol/L, 2.5 mol/L, 2.6 mol/L, 2.7 mol/L, 2.8 mol/L, 2.9 mol/L, 3.0 mol/L, 3.1 mol/L, 3.2 mol/L, 3.3 mol/L, 3.4 mol/L, 3.5 mol/L, 3.6 mol/L, 3.7 mol/L, 3.8 mol/L, 3.9 mol/L, 4 mol/L, or the like, or may also be other values within the range, which is not limited herein.

In some embodiments, a concentration of the second solution is 5 mol/L-8 mol/L.

By controlling the concentration of the second solution within the above range, side reactions are inhibited, the purity and performance of the cathode material are improved, and the structure stability of the cathode material is improved. In some embodiments, the concentration of the second solution may be 5 mol/L, 5.2 mol/L, 5.4 mol/L, 5.5 mol/L, 5.7 mol/L, 5.8 mol/L, 6.0 mol/L, 6.2 mol/L, 6.4 mol/L, 6.5 mol/L, 6.7 mol/L, 6.8 mol/L, 7.0 mol/L, 7.2 mol/L, 7.4 mol/L, 7.5 mol/L, 7.7 mol/L, 7.8 mol/L, 8 mol/L, or the like, or may also be other values within the range, which is not limited herein.

By controlling the temperature and time of the aging treatment, and controlling the concentrations of the above solutions and the ratio of the amounts of the substances of solute in the solutions within the above corresponding ranges respectively, the efficiency and effect of the doping of the fluorine ions are improved, such that the structure stability of the cathode material is improved, and the electrochemical performance of the cathode material is improved.

In some embodiments, the first solid-liquid separation treatment may be performed by means of atmospheric pressure filtration, filter pressing, suction filtration, centrifugation, etc.

In some embodiments of the present disclosure, the intermediate product and an acid solution are mixed and subjected to the slurrying treatment to obtain the reaction slurry.

Through the above step, the crystal water is reduced, a sodium ion diffusion path is optimized, the purity of the material is improved, the dispersivity of the intermediate product is improved, and the microstructure is controlled, such that the performance such as high sodium storage capacity, good cycling stability and rate performance of the cathode material is improved.

In some embodiments, a temperature for the reaction treatment is 110 °C-130 °C, and a time for the reaction treatment is 30 min-60 min.

By controlling the temperature and time of the reaction treatment within the above ranges, the crystal water fully overflows as water vapor, and the integrity and stability of the structure of the cathode material are maintained. In some embodiments, the temperature for the reaction treatment may be 110 °C, 112 °C, 115 °C, 117 °C, 120 °C, 122 °C, 125 °C, 128 °C, 130 °C, or the like, or may also be other values within the range, which is not limited herein. The time for the reaction treatment may be 30 min, 32 min, 35 min, 38 min, 40 min, 42 min, 45 min, 48min, 50 min, 52 min, 55 min, 60 min, or the like, or may also be other values within the range, which is not limited herein.

In some embodiments, a stirring speed of the reaction treatment is 100 r/min-300 r/min.

By controlling the stirring speed, the uniform mixing of the reactants is promoted, the reaction efficiency is improved, the particle size of the cathode material is controlled, and generation of by-products is reduced, such that the cathode material with excellent performance is synthesized. In some embodiments, the stirring speed of the reaction treatment may be 100 r/min, 120 r/min, 150 r/min, 200 r/min, 250 r/min, 300 r/min, or the like, or may also be other values within the range, which is not limited herein.

In some embodiments, the acid solution is a hydrochloric acid-ethanol solution, and a concentration of hydrogen ions in the acid solution is 0.5 mol/L-1 mol/L.

In the present disclosure, an ethanol-hydrogen chloride system at a high temperature is used to realize corrosion on the cathode material and azeotropy and replacement on partial crystal water. Specifically, in the present disclosure, the reaction treatment on the reaction slurry uses the corrosion on the cathode material and the azeotropy and replacement of partial crystal water by the ethanol-hydrogen chloride system at the high temperature. At a high temperature, partial crystal water and hydrogen chloride form azeotropy, to de-intercalate from the intermediate product, such that a vacant position generated accordingly is occupied by the hydrogen chloride, and the content of the crystal water of the Prussian Blue material is reduced while the collapse of a structure of the PB material caused by the de-intercalation of water is effectively reduced.

Further, the hydrogen ions may accelerate the formation of vacancies in the cathode material, and these vacancies are then occupied by chloride ions. By controlling the concentration of the hydrogen ions within the above range, the crystal water is removed while a diffusion channel of the sodium ions is optimized to increase the diffusion coefficient of the sodium ions, thereby facilitating the formation of a particular complex structure of the Prussian Blue material, and improving the rate performance and cycling stability of the cathode material. Furthermore, the presence of ethanol acts as a dispersing agent to reduce excessive aggregation of cathode material particles. In some embodiments, the concentration of hydrogen ions in the acid solution may be 0.5 mol/L, 0.55 mol/L, 0.6 mol/L, 0.65 mol/L, 0.7 mol/L, 0.75 mol/L, 0.8 mol/L, 0.85 mol/L, 0.9 mol/L, 0.95 mol/L, 1 mol/L, or the like, or may also be other values within the range, which is not limited herein.

In some embodiments, a mass ratio of solid to liquid in the reaction slurry is 1:(3-4), that is, a solid-liquid ratio in the reaction slurry is 1:(3-4).

By controlling the mass ratio, the crystal water in the intermediate product is removed, agglomeration is reduced, the electrochemical performance and production efficiency of the cathode material are improved, and costs are reduced. In some embodiments, the mass ratio of solid to liquid in the reaction slurry may be 1:3, 1:3.1, 1:3.2, 1:3.3, 1:3.4, 1:3.5, 1:3.6, 1:3.7, 1:3.8, 1:3.9, 1: 4, or the like, or may also be other values within the range, which is not limited herein.

To sum up, by controlling the slurrying treatment within the above corresponding range, a dispersion effect of the slurry is improved. Meanwhile, by controlling the conditions of the reaction treatment within the above corresponding range, an ethanol-hydrogen chloride system is fully used to perform corrosion on the intermediate product and azeotropy and replacement of partial crystal water at a high temperature, to further reduce the content of the crystal water in the cathode material, thereby improving the stability and electrochemical performance of the cathode material.

In some embodiments, the intermediate product is sequentially subjected to second washing and second drying before the slurrying treatment.

In some embodiments, a washing liquid of the second washing may be at least one of deionized water, secondary water, distilled water, pure water, or ultrapure water. The conductivity of washing water after the second washing is completed is less than or equal to 150 µS/cm, that is, the conductivity of the washing liquid after the second washing is completed is less than or equal to 150 µS/cm.

In some embodiments, after the second drying is completed, a moisture content in the intermediate product is lower than 0.2%.

In some embodiments, the second drying may use vacuum drying.

In some embodiments, a temperature for the second drying may be lower than the temperature for the reaction treatment.

In some embodiments of the present disclosure, a product obtained through the reaction treatment is subjected to a second solid-liquid separation treatment, first washing, first drying, and crushing in sequence, to obtain the cathode material.

In some embodiments, the crushed cathode material is subjected to sieving, iron removal, and packaging in sequence, to obtain a final cathode material.

Through sieving, iron removal, and packaging treatments, the quality of the cathode material in terms of particle size, purity, and preservation state is improved, thereby improving the overall performance of the cathode material in a sodium-ion battery, including improving cycling stability, rate performance, and energy density, prolonging battery life, etc.

In some embodiments, the second solid-liquid separation treatment may be performed by means of atmospheric pressure filtration, filter pressing, suction filtration, centrifugation, etc.

In some embodiments, alcohol is used to perform the first washing until a pH value of a washing liquid after washing is 5.5 or above; the first drying is performed under production of a protective gas until a mass fraction of ethanol in the material is less than 0.1%, a temperature for the first drying is 110 °C-150 °C, and an environmental oxygen content during the first drying is less than 1000 ppm; and a particle size of the cathode material obtained after crushing is 1 µm-5 µm.

Washing with the alcohol facilitates the effective removing of residual impurities, to improve the purity of the cathode material, and reduce the risks caused by the impurities in the SIB, thereby improving the stability and service life of the sodium-ion battery. Washing until the pH value is 5.5 or above ensures that the cathode material may be used in a neutral or near neutral environment, thereby improving the cycling performance and stability of a battery.

Performing the first drying under the production of the protective gas effectively reduces the risk of an oxidation reaction due to a contact between the cathode material and oxygen in air, to reduce by-products, thereby maintaining the electrochemical activity of the cathode material. By controlling the temperature for the first drying at 110 °C-150 °C, the ethanol is evaporated rapidly, the mass fraction of the ethanol is controlled to be less than 0.1%, and the content of the crystal water in the cathode material is reduced as much as possible, such that the structure stability of the cathode material is improved, and negative effects on the performance of the sodium-ion battery due to the precipitation of moisture during a battery cycling process are reduced. By controlling the environmental oxygen content during the first drying to be less than 1000 ppm, an almost anaerobic environment is provided for the first drying, thereby further reducing the possibility of oxidation. In some embodiments, the temperature for the first drying may be 110 °C, 115 °C, 120 °C, 125 °C, 130 °C, 135 °C, 140 °C, 145 °C, 150 °C, or the like, or may also be other values within the range, which is not limited herein. The particle size of the cathode material obtained after crushing may be 1 µm, 1.5 µm, 2 µm, 2.5 µm, 3.0 µm, 3.5 µm, 4.0 µm, 4.5 µm, 5 µm, or the like, or may also be other values within the range, which is not limited herein.

By controlling the particle size of the crushed cathode material within the above range, the particle size uniformity and compaction density of the cathode material are improved. Through a synergistic effect of the above steps, the electrochemical performance of the sodium-ion battery is improved.

Furthermore, in some embodiments, the protective gas of the first drying is nitrogen, the first drying is performed in an oven, and the environmental oxygen content during the first drying refers to an oxygen content in the oven.

In third aspect, the present disclosure provides a cathode plate. The cathode plate includes the above cathode material, or a cathode material prepared by the above method for preparing a cathode material.

In this embodiment, thanks to the low content of the crystal water of the cathode material, and since the cathode plate including the cathode material is prepared by the cathode material of the present disclosure, the electrochemical performance such as cycling stability and rate performance of the cathode plate is excellent.

In fourth aspect, the present disclosure provides a sodium-ion battery, including a cathode plate, and the cathode plate is the above cathode plate.

In this embodiment, since the sodium-ion battery is prepared by the cathode plate of the present disclosure, the sodium-ion battery has high cycling performance and rate performance, and the low content of the crystal water of the cathode material reduces the hydrolysis risk of electrolyte of sodium-ion battery, such that the stability and electrochemical performance of the sodium-ion battery are improved.

In fifth aspect, the present disclosure provides an electric apparatus, including a sodium-ion battery. The sodium-ion battery is the above sodium-ion battery. In this embodiment, the electric apparatus includes the sodium-ion battery, and thus has good stability and electrochemical performance.

The electric apparatus provided in the embodiment of the present disclosure may be, but is not limited to, mobile phones, tablets, notebook computers, electric toys, electric tools, storage battery cars, electric automobiles, steamships, spacecrafts, etc. The electric toys may include fixed or mobile electric toys, such as games consoles, electric car toys, electric boat toys, electric airplane toys, etc.; and the spacecrafts may include airplanes, rockets, space shuttles, spacecrafts, etc.

### I. Preparation method

### Embodiment 1

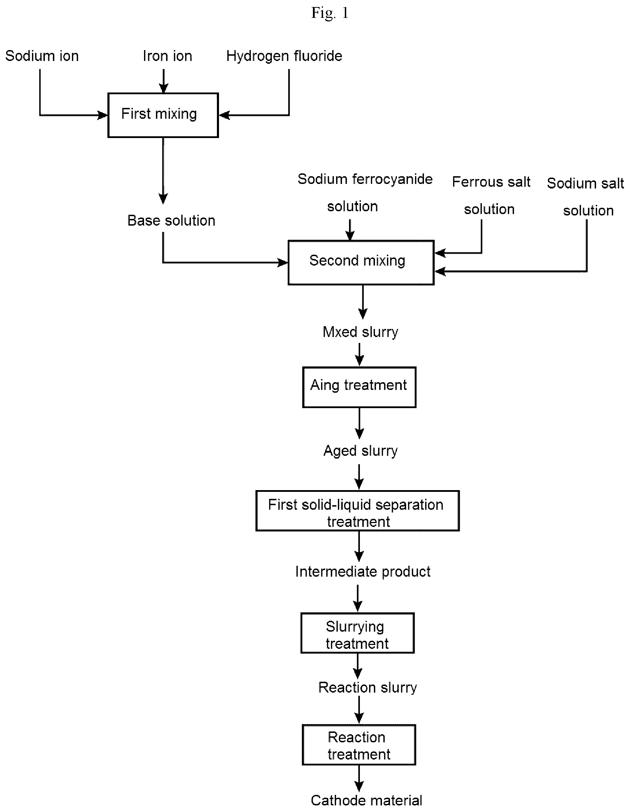

Fig. 1 was a flowchart of a preparation process of a cathode material. Sodium fluoride and iron fluoride were mixed to prepare a first solution, a molar ratio of the sodium fluoride to the iron fluoride was 1:0.15, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.00}Fe(CN)_{4.99}F_{1.01}·1.12H₂O·0.003HCl.

Detection data of the obtained cathode material was as follows.

**Table 1**

| Index | Na | Fe | F | Cl |
|---|---|---|---|---|
| Data | 14.07% | 34.15% | 5.81% | 368 ppm |
| Bulk density | Tap density | Compaction density | D10 | D50 |
| 0.61 g/mL | 1.20 g/mL | 1.93 g/mL | 0.8 µm | 2.7 µm |
| D90 | BET | Iron leaching amount | Magnetic substance | Free moisture |
| 14.7 µm | 16.5 m²/g | 12.5 ppm | 0.14 ppm | 137 ppm |
| Ca | Mg | Ni | Cu | Zn |
| 14.6 ppm | 21.5 ppm | 0.4 ppm | 0.1 ppm | 8.4 ppm |
| Co | Pb | Cd | K | Number of crystal water |
| 1.5 ppm | 0.4 ppm | 0.1 ppm | 9.4 ppm | 1.12 |
| Sodium ion diffusion coefficient | | | | |
| 8.97×10⁻¹¹ cm²/s | | | | |

### Embodiment 2

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.05}Fe(CN)_{4.92}F_{1.08}·1.10H₂O·0.003HCl.

Detection data of the obtained cathode material was as follows.

**Table 2**

| Index | Na | Fe | F | Cl |
|---|---|---|---|---|
| Data | 14.02% | 35.86% | 6.23% | 359 ppm |
| Bulk density | Tap density | Compaction density | D10 | D50 |
| 0.60 g/mL | 1.23 g/mL | 1.91 g/mL | 0.5 µm | 2.4 µm |
| D90 | BET | Iron leaching amount | Magnetic substance | Free moisture |
| 15.6 µm | 16.9 m²/g | 11.3 ppm | 0.11 ppm | 109 ppm |
| Ca | Mg | Ni | Cu | Zn |
| 11.5 ppm | 23.7 ppm | 0.2 ppm | 0.1 ppm | 8.1 ppm |
| Co | Pb | Cd | K | Number of crystal water |
| 1.1 ppm | 0.3 ppm | 0.1 ppm | 9.1 ppm | 1.10 |
| Sodium ion diffusion coefficient | | | | |
| 5.67×10⁻¹¹ cm²/s | | | | |

### Embodiment 3

Sodium fluoride and iron fluoride were mixed to prepare a first solution, a molar ratio of the sodium fluoride to the iron fluoride was 1:0.3, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.12}Fe(CN)_{4.21}F_{1.79}·1.48H₂O·0.004HCl.

Detection data of the obtained cathode material was as follows.

**Table 3**

| Index | Na | Fe | F | Cl |
|---|---|---|---|---|
| Data | 13.74% | 35.38% | 10.16% | 416 ppm |
| Bulk density | Tap density | Compaction density | D10 | D50 |
| 0.63 g/mL | 1.29 g/mL | 1.98 g/mL | 0.4 µm | 2.3 µm |
| D90 | BET | Iron leaching amount | Magnetic substance | Free moisture |
| 19.5 µm | 14.1 m²/g | 59.2 ppm | 0.14 ppm | 399 ppm |
| Ca | Mg | Ni | Cu | Zn |
| 11.3 ppm | 23.1 ppm | 0.3 ppm | 0.2 ppm | 8.9 ppm |
| Co | Pb | Cd | K | Number of crystal water |
| 1.6 ppm | 0.2 ppm | 0.1 ppm | 9.7 ppm | 1.48 |
| Sodium ion diffusion coefficient | | | | |
| 4.89×10⁻¹³ cm²/s | | | | |

### Embodiment 4

Sodium fluoride and iron fluoride were mixed to prepare a first solution, a molar ratio of the sodium fluoride to the iron fluoride was 1:0.2, and a concentration of fluoride ions in the first solution was 2 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.00}Fe(CN)_{5.00}F_{1.00}·1.13H₂O·0.003HCl.

Detection data of the obtained cathode material was as follows.

**Table 4**

| Index | Na | Fe | F | Cl |
|---|---|---|---|---|
| Data | 14.12% | 34.18% | 5.68% | 361 ppm |
| Bulk density | Tap density | Compaction density | D10 | D50 |
| 0.60 g/mL | 1.21 g/mL | 1.91 g/mL | 0.8 µm | 2.3 µm |
| D90 | BET | Iron leaching amount | Magnetic substance | Free moisture |
| 16.1 µm | 16.1 m²/g | 10.3 ppm | 0.12 ppm | 198 ppm |
| Ca | Mg | Ni | Cu | Zn |
| 14.1 ppm | 21.1 ppm | 0.4 ppm | 0.1 ppm | 6.5 ppm |
| Co | Pb | Cd | K | Number of crystal water |
| 1.1 ppm | 0.4 ppm | 0.1 ppm | 9.1 ppm | 1.19 |
| Sodium ion diffusion coefficient | | | | |

| | | | | |
|---|---|---|---|---|
| | | 7.69×10⁻¹¹ cm²/s | | |

### Embodiment 5

Sodium fluoride and iron fluoride were mixed to prepare a first solution, a molar ratio of the sodium fluoride to the iron fluoride was 1:0.2, and a concentration of fluoride ions in the first solution was 1.5 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.00}Fe(CN)_{5.06}F_{0.94}·1.38H₂O·0.003HCl.

Detection data of the obtained cathode material was as follows.

**Table 5**

| Index | Na | Fe | F | Cl |
|---|---|---|---|---|
| Data | 14.11% | 34.18% | 5.43% | 379 ppm |
| Bulk density | Tap density | Compaction density | D10 | D50 |
| 0.58 g/mL | 1.15 g/mL | 1.78 g/mL | 0.3 µm | 2.9 µm |
| D90 | BET | Iron leaching amount | Magnetic substance | Free moisture |
| 17.9 µm | 18.6 m²/g | 12.1 ppm | 0.12 ppm | 178 ppm |
| Ca | Mg | Ni | Cu | Zn |
| 11.4 ppm | 19.5 ppm | 0.4 ppm | 0.1 ppm | 6.8 ppm |
| Co | Pb | Cd | K | Number of crystal water |
| 1.1 ppm | 0.4 ppm | 0.1 ppm | 9.9 ppm | 1.38 |
| Sodium ion diffusion coefficient | | | | |
| 7.57×10⁻¹³ cm²/s | | | | |

### Embodiment 6

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 2.5, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.08}Fe_{0.97}Fe(CN)_{4.96}F_{1.04}·1.44H₂O·0.004HCl.

Detection data of the obtained cathode material was as follows.

**Table 6**

| Index | Na | Fe | F | Cl |
|---|---|---|---|---|
| Data | 14.86% | 32.71% | 6.97% | 514 ppm |
| Bulk density | Tap density | Compaction density | D10 | D50 |
| 0.69 g/mL | 1.31 g/mL | 2.04 g/mL | 0.3 µm | 2.9 µm |
| D90 | BET | Iron leaching amount | Magnetic substance | Free moisture |
| 17.6 µm | 13.6 m²/g | 6.7 ppm | 0.12 ppm | 103 ppm |
| Ca | Mg | Ni | Cu | Zn |
| 16.7 ppm | 23.1 ppm | 0.2 ppm | 0.1 ppm | 0.2 ppm |
| Co | Pb | Cd | K | Number of crystal water |
| 0.2 ppm | 0.1 ppm | 0.4 ppm | 12.1 ppm | 1.44 |
| Sodium ion diffusion coefficient | | | | |
| 1.32×10⁻¹¹ cm²/s | | | | |

### Embodiment 7

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 2.0, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.16}Fe_{0.93}Fe(CN)_{5.08}F_{0.92}·1.58H₂O·0.007HCl.

Detection data of the obtained cathode material was as follows.

**Table 7**

| Index | Na | Fe | F | Cl |
|---|---|---|---|---|
| Data | 14.21% | 32.35% | 5.29% | 766 ppm |
| Bulk density | Tap density | Compaction density | D10 | D50 |
| 0.78 g/mL | 1.39 g/mL | 2.09 g/mL | 0.3 µm | 3.1 µm |
| D90 | BET | Iron leaching amount | Magnetic substance | Free moisture |
| 18.5 µm | 11.3 m²/g | 6.4 ppm | 0.12 ppm | 189 ppm |
| Ca | Mg | Ni | Cu | Zn |
| 12.5 ppm | 20.4 ppm | 0.2 ppm | 0.1 ppm | 0.3 ppm |
| Co | Pb | Cd | K | Number of crystal water |
| 0.2 ppm | 0.3 ppm | 0.4 ppm | 15.7 ppm | 1.58 |
| Sodium ion diffusion coefficient | | | | |
| 8.65×10⁻¹³ cm²/s | | | | |

### Embodiment 8

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 2 mol/L, a concentration of the ferrous salt solution was 2.5 mol/L, and a concentration of the sodium salt solution was 3 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.5 mol/L; a complexing agent was ethylenediaminetetraacetic acid (EDTA), and a concentration of the EDTA in the ferrous salt solution was 0.2 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.02}Fe(CN)_{4.99}F_{1.01}·1.19H₂O·0.003HCl.

Detection data of the obtained cathode material was as follows.

**Table 8**

| Index | Na | Fe | F | Cl |
|---|---|---|---|---|
| Data | 14.06% | 34.33% | 5.83% | 378 ppm |
| Bulk density | Tap density | Compaction density | D10 | D50 |
| 0.66 g/mL | 1.29 g/mL | 1.97 g/mL | 0.6 µm | 2.9 µm |
| D90 | BET | Iron leaching amount | Magnetic substance | Free moisture |
| 16.5 µm | 15.6 m²/g | 11.2 ppm | 0.14 ppm | 168 ppm |
| Ca | Mg | Ni | Cu | Zn |
| 14.2 ppm | 23.7 ppm | 0.4 ppm | 0.1 ppm | 8.1 ppm |
| Co | Pb | Cd | K | Number of crystal water |
| 1.2 ppm | 0.4 ppm | 0.1 ppm | 9.7 ppm | 1.19 |
| Sodium ion diffusion coefficient | | | | |
| 8.12×10⁻¹¹ cm²/s | | | | |

### Embodiment 9

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1:1.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.8 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.16}Fe_{1.12}Fe(CN)_{5.38}F_{1.01}·1.55H₂O·0.004HCl.

Detection data of the obtained cathode material was as follows.

**Table 9**

| Index | Na | Fe | F | Cl |
|---|---|---|---|---|
| Data | 14.03% | 33.33% | 5.42% | 411 ppm |
| Bulk density | Tap density | Compaction density | D10 | D50 |
| 0.64 g/mL | 1.23 g/mL | 1.94 g/mL | 0.4 µm | 2.8 µm |
| D90 | BET | Iron leaching amount | Magnetic substance | Free moisture |
| 13.5 µm | 15.2 m²/g | 15.3 ppm | 0.12 ppm | 189 ppm |
| Ca | Mg | Ni | Cu | Zn |
| 13.1 ppm | 23.1 ppm | 0.2 ppm | 0.1 ppm | 6.7 ppm |
| Co | Pb | Cd | K | Number of crystal water |
| 1.9 ppm | 0.3 ppm | 0.1 ppm | 10.3 ppm | 1.55 |
| Sodium ion diffusion coefficient | | | | |
| 3.74×10⁻¹³ cm²/s | | | | |

### Embodiment 10

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.5 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.00}Fe(CN)_{4.99}F_{1.01}·1.24H₂O·0.002HCl.

Detection data of the obtained cathode material was as follows.

**Table 10**

| Index | Na | Fe | F | Cl |
|---|---|---|---|---|
| Data | 14.04% | 34.13% | 5.79% | 218 ppm |
| Bulk density | Tap density | Compaction density | D10 | D50 |
| 0.60 g/mL | 1.18 g/mL | 1.91 g/mL | 0.7 µm | 2.5 µm |
| D90 | BET | Iron leaching amount | Magnetic substance | Free moisture |
| 13.2 µm | 16.6 m²/g | 12.9 ppm | 0.14 ppm | 212 ppm |
| Ca | Mg | Ni | Cu | Zn |
| 14.1 ppm | 21.9 ppm | 0.2 ppm | 0.1 ppm | 7.2 ppm |
| Co | Pb | Cd | K | Number of crystal water |
| 1.1 ppm | 0.7 ppm | 0.1 ppm | 9.1 ppm | 1.24 |
| Sodium ion diffusion coefficient | | | | |
| 4.72×10⁻¹¹ cm²/s | | | | |

### Embodiment 11

Sodium fluoride and iron fluoride were mixed to prepare a first solution, a molar ratio of the sodium fluoride to the iron fluoride was 1:0.2, and a concentration of fluoride ions in the first solution was 3.45 mol/L; and the first solution was mixed with a second solution, the second solution was a hydrogen fluoride solution with a concentration of 6.5 mol/L, the pH of the solution mixed was regulated to 3.1, and a base solution was prepared.

Sodium ferrocyanide, a ferrous salt, and a sodium salt were respectively prepared into solutions; a concentration of the sodium ferrocyanide solution was 1.5 mol/L, a concentration of the ferrous salt solution was 2 mol/L, and a concentration of the sodium salt solution was 4 mol/L; temperatures of the sodium ferrocyanide solution, the ferrous salt solution, and the sodium salt solution were held at 80 °C; the ferrous salt was ferrous chloride; sodium sulphite was added to the ferrous salt solution, and a concentration of the sodium sulphite in the ferrous salt solution was 0.3 mol/L; a complexing agent was ethylenediaminetetraacetic acid (EDTA), and a concentration of the EDTA in the ferrous salt solution was 0.08 mol/L; a mass proportion of the sodium fluoride in solute of the sodium salt solution was 15%, and the remaining sodium salt was sodium chloride; a molar ratio of solute of the sodium ferrocyanide, ferrous chloride, and sodium salt solutions was 1:1.35:2.5; and in a stirring state, the three solutions were added to the base solution together, an addition time was 45 min, and then aging treatment was continuously performed for 1.5 h at a temperature of 80 °C, to obtain a reaction slurry.

The reaction slurry was filtered and then washed with pure water until the conductivity of a washing liquid was ≤150 µS/cm (second washing), and a moisture content was lower than 0.2% after the obtained washing material was subjected to vacuum drying (second drying), to obtain an intermediate product; the intermediate product was transferred into a sealed reactor, a hydrochloric acid-ethanol solution with a concentration of hydrogen ions being 0.3 mol/L was added for slurrying, to obtain the reaction slurry, and a solid-liquid ratio of the reaction slurry was 1:3.5; the sealed reactor was heated to 120 °C, a pressure in the sealed reactor was 3.3 kg/cm², the reaction slurry reacted for 45 min under these conditions, and a stirring speed was 180 r/min; then cooling was performed, and then filtration washing was performed; alcohol was used as a washing liquid for washing, washing was performed until a pH value of the washing liquid was 5.5 and above, and then washing was stopped; the washed material was subjected to first drying by using a nitrogen airflow, a temperature for the first drying was 130 °C; an oxygen content during the first drying in an oven was maintained below 1000 ppm; drying was stopped after an alcohol content in the material was lower than 0.1 wt%; and then crushing was stopped after a particle size of the material was 2.7 µm, to obtain a cathode material, with a specific chemical formula being Na_{2.00}Fe_{1.00}Fe(CN)_{4.99}F_{1.01}·1.74H₂O·0.001HCl.

Detection data of the obtained cathode material was as follows.

**Table 11**

| Index | Na | Fe | F | Cl |
|---|---|---|---|---|
| Data | 14.01% | 34.08% | 5.75% | 121 ppm |
| Bulk density | Tap density | Compaction density | D10 | D50 |
| 0.58 g/mL | 1.16 g/mL | 1.87 g/mL | 0.3 µm | 2.3 µm |
| D90 | BET | Iron leaching amount | Magnetic substance | Free moisture |
| 13.0 µm | 16.9 m²/g | 13.8 ppm | 0.12 ppm | 256 ppm |
| Ca | Mg | Ni | Cu | Zn |
| 14.9 ppm | 21.1 ppm | 0.2 ppm | 0.1 ppm | 6.8 ppm |
| Co | Pb | Cd | K | Number of crystal water |
| 1.3 ppm | 0.5 ppm | 0.1 ppm | 8.7 ppm | 1.74 |
| Sodium ion diffusion coefficient | | | | |
| 9.23×10⁻¹³ cm²/s | | | | |

### Comparative embodiment 1

A difference between this comparative embodiment and Embodiment 1 lied in that, the sodium fluoride and the iron fluoride were respectively replaced with sodium chloride and ferric chloride in equal parts, to finally obtain a comparative cathode material, with a specific chemical formula being Na_{2.00}Fe_{1.00}Fe(CN)_{5.75}F_{0.25}·1.65H₂O·0.002HCl.

Detection data of an obtained PB sodium battery material was as follows.

**Table 12**

| Index | Na | Fe | F | Cl |
|---|---|---|---|---|
| Data | 13.46% | 32.26% | 1.39% | 213 ppm |
| Bulk density | Tap density | Compaction density | D10 | D50 |
| 0.58 g/mL | 1.17 g/mL | 1.87 g/mL | 0.5 µm | 2.3 µm |
| D90 | BET | Iron leaching amount | Magnetic substance | Free moisture |
| 12.8 µm | 18.9 m²/g | 21.5 ppm | 0.18 ppm | 237 ppm |
| Ca | Mg | Ni | Cu | Zn |
| 23.5 ppm | 13.6 ppm | 0.5 ppm | 0.2 ppm | 4.6 ppm |
| Co | Pb | Cd | K | Number of crystal water |
| 0.9 ppm | 0.4 ppm | 0.2 ppm | 6.8 ppm | 1.65 |
| Sodium ion diffusion coefficient | | | | |
| 5.46×10⁻¹³ cm²/s | | | | |

### Comparative embodiment 2

A difference between this comparative embodiment and Embodiment 1 lied in that, the hydrogen fluoride was not added, a comparative cathode material was finally obtained, with a specific chemical formula being Na_{2.00}Fe_{1.00}Fe(CN)_{5.55}F_{0.45}·1.45H₂O·0.001HCl.

Detection data of an obtained PB sodium battery material was as follows.

**Table 13**

| Index | Na | Fe | F | Cl |
|---|---|---|---|---|
| Data | 13.54% | 32.34% | 2.28% | 117 ppm |
| Bulk density | Tap density | Compaction density | D10 | D50 |
| 0.54 g/mL | 1.12 g/mL | 1.81 g/mL | 0.3 µm | 2.5 µm |
| D90 | BET | Iron leaching amount | Magnetic substance | Free moisture |
| 14.5 µm | 19.4 m²/g | 23.5 ppm | 0.14 ppm | 254 ppm |
| Ca | Mg | Ni | Cu | Zn |
| 21.4 ppm | 12.8 ppm | 0.5 ppm | 0.2 ppm | 4.1 ppm |
| Co | Pb | Cd | K | Number of crystal water |
| 0.6 ppm | 0.2 ppm | 0.2 ppm | 6.2 ppm | 1.45 |
| Sodium ion diffusion coefficient | | | | |
| 6.59×10⁻¹³ cm²/s | | | | |

### Comparative embodiment 3

Preparation of Prussian Blue cathode material carbon-ferrocyanide manganese nickel sodium:
(1) 0.04 mol of sodium ferrocyanide and 20 mg of Vulcan carbon for an activation treatment were weighed and dissolved in 100 mL of deionized water, to prepare a solution A; and a concentration of the sodium ferrocyanide was 0.4 mol/L, and a concentration of the Vulcan carbon was 0.2 g/L.
(2) 0.032 mol of manganese sulfate and 0.128 mol of sodium citrate were weighed and dissolved in 80 mL of deionized water, to prepare a solution B; a concentration of the manganese sulfate was 0.4 mol/L, and a molar ratio of the manganese sulfate to the sodium citrate was 1:4.
(3) 0.008 mol of nickel sulfate and 0.032 mol of sodium citrate were weighed and dissolved in 20 mL of deionized water, to prepare a solution C; a concentration of the nickel sulfate was 0.4 mol/L, a molar ratio of the nickel sulfate to the sodium citrate was 1:4, and a volume ratio of the solution A, the solution B, and the solution C was 1:0.8:0.2.
(4) The solution A was placed on a magnetic stirrer for stirring, and was heated to 60 °C; and the solution B was dropwise added to the high-speed stirring solution A by using a peristaltic pump, a white precipitate was produced during addition, an addition speed was 0.25 mL/min, and a precursor solution was obtained.
(5) The precursor solution A was continuously stirred for 2 hours, the solution C was dropwise added to the high-speed stirring precursor solution A by using the peristaltic pump, and an addition speed was 0.25 mL/min.
(6) The mixed solution was continuously stirred for 0.5 h, and then allowed to stand for 6 h.
(7) The mixed solution after standing was centrifuged to obtain a light green precipitate, and the light green precipitate was washed, centrifuged, and then dried for 24 h at 120 °C in vacuum, to obtain a Prussian Blue cathode material.

### II. Test method

### Property test for cathode material

A free moisture content was tested by using Karl Fischer coulometry.

Crystal water was tested by using a high-temperature weightlessness method.

A D10/D50/D90 particle size was tested by using a laser particle size analyzer according to a laser diffraction method.

A BET specific surface area was tested by using a BET tester using a nitrogen adsorption method.

Impurity elements were tested by using an Inductively Coupled Plasma Atomic Emission Spectroscopy (ICP-OES).

A magnetic substance was collected by using a magnet, then dissolved with aqua regia, and obtained through testing using the Inductively Coupled Plasma Atomic Emission Spectroscopy.

Iron leaching amount: 1 g of a sample to be tested was added to 100 mL of a hydrogen fluoride-ethanol solution with a concentration of 0.1 mol/L, and was dissolved for 30 min while stirring at 45 °C, then filtration was performed, the content of an iron content in the obtained filtrate was measured, that is, an iron leaching amount.

An bulk density was tested by using a funneling method according to GB∕T 31057.1-2014.

A tap density was tested by using a tap density meter, and the number of times of vibration was 5000.

A compaction density was tested by using a compaction density meter, a test pressure was 3T, and a press time was 30s.

Chloride ions were tested by using a chloride ion selective electrode.

Method for testing sodium ion diffusion coefficient: A sodium ion diffusion coefficient was obtained through testing using Electrochemical Impedance Spectroscopy (EIS).

### III. Test result analysis for embodiments and comparative embodiments

The materials obtained were assembled into a button battery, and an assembly process was as follows:
The cathode material obtained in the embodiments or comparative embodiments was separately mixed with acetylene black (conductive agent), Polyvinylidene Fluoride (PVDF, as a binder) according to a mass ratio of 85:10:5, with weighing mass accurate to 0.001 g, to obtain a cathode active mixture. Carbon-coated aluminum foil was used as a current collector, the cathode active mixture and N-methyl-2-pyrrolidone were mixed and stirred for slurrying, the slurry was uniformly coated on the carbon-coated aluminum foil, dried in a 100 °C oven, and cut into a cathode plate with a diameter of 15 mm and a thickness of 0.10 mm, and the cathode plate was weighed, with mass accurate to 0.0001 g.

### Assembly of battery

In an inert gas glove box of which water and oxygen contents were both ≤0.0005%, a metal sodium plate was used as an anode sheet, a polypropylene microporous film was used as a diaphragm, electrolyte was composed of 1 mol/L sodium hexafluorophosphate and a mixed carbonate-based organic solvent [Ethylene Carbonate (EC)/Diethyl Carbonate (DEC)/Fluoroethylene Carbonate (FEC) (a volume ratio of EC, DEC, and FEC was 1:1:0.05)], the cathode plate, the anode sheet, the diaphragm, and the electrolyte were assembled into the button battery, and the button battery was sealed, and then tested by using a sodium-ion battery electrochemical performance tester.

### Test for battery

The prepared button battery was subjected to a charging-discharging cycle at 25 °C on the SIB electrochemical performance tester, and a charging-discharging test was as follows.
a) Current charging was performed at a rate of 0.2 C, and a limited charge voltage was 4.2 V.
b) Current discharging was performed at the rate of 0.2 C, and a discharge cut-off voltage was 2.0 V.

The button battery was placed in an incubator (25±0.2 °C) for a cycling performance test, 1000 cycles were performed at 1 C, a capacity retention rate was 89.9% (a conventional Prussian Blue sodium battery material, 1000 cycles were performed, and the capacity retention rate was basically below 85%), and test results were shown as follows.

**Table 14**

| Embodiment/Comparative embodiment | Capacity retention rate/% for 1000 cycles at 1C | First charging specific capacity at 0.2 C (mAh/g) | First discharging specific capacity at 0.2 C (mAh/g) |
|---|---|---|---|
| Embodiment 1 | 89.9 | 164.9 | 147.2 |
| Embodiment 2 | 89.1 | 163.1 | 147.9 |
| Embodiment 3 | 86.2 | 150.9 | 144.8 |
| Embodiment 4 | 89.3 | 163.8 | 147.4 |
| Embodiment 5 | 86.2 | 155.3 | 145.1 |
| Embodiment 6 | 89.3 | 163.6 | 146.9 |
| Embodiment 7 | 89.9 | 156.4 | 144.9 |
| Embodiment 8 | 89.9 | 164.9 | 147.2 |
| Embodiment 9 | 86.1 | 158.6 | 144.1 |
| Embodiment 10 | 89.2 | 164.1 | 147.1 |
| Embodiment 11 | 86.1 | 154.6 | 144.6 |
| Comparative embodiment 1 | 83.8 | 155.1 | 142.1 |
| Comparative embodiment 2 | 84.3 | 156.4 | 142.4 |
| Comparative embodiment 3 (conventional Prussian Blue sodium battery material) | 83.5 | 158.4 | 142.6 |

As was shown from data in Table 14, the capacity retention rate of the cathode material in the embodiments of the present disclosure after 1000 cycles at 1 C was higher than 86%, the first charging specific capacity at 0.2 C was above 150 mAh/g, and the first discharging specific capacity at 0.2 C was above 144 mAh/g, indicating that the overall electrical performance of the cathode material in the embodiments of the present disclosure was significantly superior to the overall electrical performance of the Prussian Blue sodium battery material in Comparative embodiments 1 to 3.

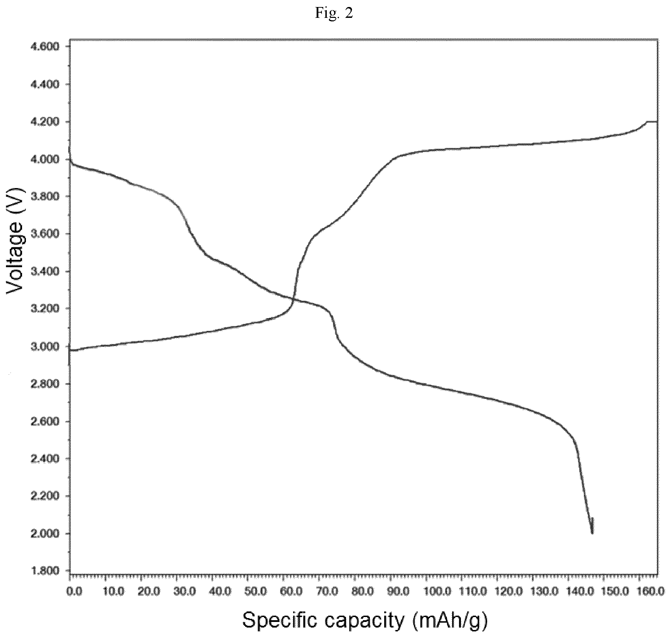

Further, Fig. 2 was a test result diagram of a charging specific capacity and a discharging specific capacity of a sodium-ion battery of the cathode material in Embodiment 1. As was shown in Fig. 2, the cathode material in Embodiment 1 had excellent charging-discharging performance.

From the chemical formula of the comparative cathode material in Comparative embodiment 1 being Na_{2.00}Fe_{1.00}Fe(CN)_{5.75}F_{0.25}·1.65H₂O·0.002HCl and the chemical formula of the comparative cathode material in Comparative embodiment 2 being Na_{2.00}Fe_{1.00}Fe(CN)_{5.55}F_{0.45}·1.45H₂O·0.001HCl, it might be learned that, the contents of the cyanide ions and fluoride ions were all outside the range of 4.20≤z≤5.50 in the general chemical formula NaₓFe_{y}Fe(CN)_{z}F_{6-z}·nH₂O·mHCl of the Prussian Blue material of the present disclosure, and the content of the fluoride ions in the cathode material in Comparative embodiments 1 and 2 was lower than the content of the fluoride ions in the obtained Prussian Blue material in the embodiments of the present disclosure, causing the electrochemical performance of the sodium-ion battery corresponding to the cathode material in Comparative embodiments 1 and 2 to be inferior to the electrochemical performance of the sodium-ion battery corresponding to the cathode material in the embodiments of the present disclosure.

The electrochemical performance results of the button battery having the cathode material provided in the embodiments and the electrochemical performance results of the button battery having the cathode material provided in the Comparative embodiment 1 to Comparative embodiment 3 in Table 14 indicated that, in the present disclosure, by controlling the chemical compositions of the Prussian Blue material, fluorine was introduced to replace partial cyanide ions, to reduce the content of the crystal water and use HCl to occupy a vacancy of the crystal water, such that the stability of the cathode material was effectively improved, and the electrochemical performance of the cathode material was improved.

It is to be noted that the present disclosure is not limited to the aforementioned embodiments. The above embodiments are only illustrative, and embodiments that have the substantially same composition and play the same acting role as the technical idea within the scope of technical solution of the present disclosure are all included in the technical scope of the present disclosure. In addition, other embodiments constructed by applying various variations that can be thought of by those skilled in the art and by combining some constituent elements of the embodiments without departing from the scope of the main idea of the present disclosure are also included in the scope of the present disclosure.

## Claims

1. A cathode material, comprising a Prussian Blue material, wherein a molecular formula of the Prussian Blue material is NaₓFe_{y}Fe(CN)_{z}F_{6-z}·nH₂O·mHCl, wherein 1.90≤x≤2.20, 0.9≤y≤1.2, 4.20≤z≤5.50, 1.00≤n≤1.75, and 0.001≤m≤0.007.

2. The cathode material according to claim 1, wherein a diffusion coefficient of sodium ions in the Prussian Blue material is 3.00×10⁻¹³ cm²/s-1.00×10⁻¹⁰ cm²/s.

3. A method for preparing a cathode material, comprising:
providing a base solution, wherein the base solution comprises sodium ions, iron ions, and hydrogen fluoride;
mixing the base solution, a sodium ferrocyanide solution, a ferrous salt solution, and a sodium salt solution, and performing an aging treatment to obtain an aged slurry;
performing a first solid-liquid separation treatment on the aged slurry to obtain an intermediate product;
performing a slurrying treatment on the intermediate product to obtain a reaction slurry; and
performing a reaction treatment on the reaction slurry to obtain a cathode material.

4. The method for preparing a cathode material according to claim 3, wherein the step of obtaining the base solution comprises: mixing a first solution and a second solution to obtain the base solution, wherein the first solution comprises sodium fluoride and iron fluoride, and the second solution comprises hydrogen fluoride;
a pH value of the base solution is 2.5-3.5;
a molar ratio of solute of the sodium ferrocyanide solution, solute of the ferrous salt solution, and solute of the sodium salt solution is 1:(1.2-1.5):(2-3);
a concentration of the sodium ferrocyanide solution is 1 mol/L-2 mol/L; and/or
a concentration of the ferrous salt solution is 1.5 mol/L-2.5 mol/L, and the ferrous salt solution is selected from any one or more of a ferrous chloride solution, a ferrous sulfate solution, and a ferrous acetate solution; and/or
the ferrous salt solution further comprises a reducing agent and a complexing agent; and/or the reducing agent is sulfite and/or hydrazine hydrate; and/or
a concentration of the reducing agent in the ferrous salt solution is 0.1 mol/L-0.5 mol/L; and/or
the complexing agent is ethylenediaminetetraacetic acid and/or citric acid; and/or
a concentration of the complexing agent in the ferrous salt solution is 0.01 mol/L-0.2 mol/L; and/or
a concentration of the sodium salt solution is 3 mol/L-5 mol/L, a mass proportion of sodium fluoride in the solute of the sodium salt solution is 10%-20%, and the remaining sodium salt in the solute of the sodium salt solution is selected from any one or more of sodium chloride, sodium sulfate, sodium acetate, and sodium citrate.

5. The method for preparing a cathode material according to claim 3 or 4, wherein a temperature for the aging treatment is 70 °C-90 °C, and a time for the aging treatment is 1 h-2 h;
a molar ratio of the sodium fluoride to the iron fluoride in the first solution is 1:(0.1-0.2); and/or
a total concentration of fluoride ions in the first solution is 2 mol/L-4 mol/L; and/or
a concentration of the second solution is 5 mol/L-8 mol/L.

6. The method for preparing a cathode material according to claim 3, wherein the intermediate product and an acid solution are mixed and subjected to the slurrying treatment to obtain the reaction slurry; and/or
a temperature for the reaction treatment is 110 °C-130 °C, and a time for the reaction treatment is 30 min-60 min; and/or
the acid solution is a hydrochloric acid-ethanol solution, and a concentration of hydrogen ions in the acid solution is 0.5 mol/L-1 mol/L; and/or
a mass ratio of solid to liquid in the reaction slurry is 1:(3-4).

7. The method for preparing a cathode material according to claim 3, wherein the intermediate product is sequentially subjected to second washing and second drying before the slurrying treatment, wherein the conductivity of washing water after the second washing is completed is ≤150 µS/cm, and a moisture content in the intermediate product is lower than 0.2%.

8. The method for preparing a cathode material according to claim 3, wherein a product obtained through the reaction treatment is subjected to a second solid-liquid separation treatment, first washing, first drying, and crushing in sequence, to obtain the cathode material; and/or
alcohol is used to perform the first washing until a pH value of a washing liquid after washing is 5.5 and above;
the first drying is performed under production of a protective gas until a mass fraction of ethanol in the material is less than 0.1%, a temperature for the first drying is 110 °C-150 °C, and an environmental oxygen content during the first drying is less than 1000 ppm; and
a particle size of the cathode material obtained after crushing is 1 µm-5 µm.

9. A cathode plate, comprising the cathode material according to any one of claims 1 to 2, or a cathode material prepared by the method for preparing a cathode material according to any one of claims 3 to 8.

10. A Sodium-Ion Battery, comprising a cathode plate, wherein the cathode plate is the cathode plate according to claim 9.
